# EUROPÄISCHE PATENTSCHRIFT

(11) **EP 0 736 720 B1**
(45) Veröffentlichungstag und Bekanntmachung des Hinweises auf die Patenterteilung: **12.01.2005**
(21) Anmeldenummer: 96104756.0
(22) Anmeldetag: 26.03.1996
(51) Int. Cl.: F16L 55/16

(54) **Verbindungselement für in Kabelkanäle verlegte Kabel**
Connector for cables in cable ducts
Connecteur pour câbles dans canalisations pour des câbles

(30) Priorität: 06.04.1995 DE 19512837
(43) Veröffentlichungstag der Anmeldung: 09.10.1996
(73) Patentinhaber: gabo Systemtechnik GmbH, 94559 Niederwinkling (DE)
(72) Erfinder: Gruber, Werner, 94327 Bogen (DE); Schleinkofer, Ernst, 94327 Bogen (DE)

(56) Entgegenhaltungen:
- WO-A-91/12410
- CA-A- 1 250 027
- DE-A- 3 708 648
- DE-A- 3 721 935
- DE-A- 4 236 838
- DE-U- 9 316 367
- DIPL.-ING. DR. E. VOGELSANG: "Mehrfachrohr-System Vogelsang M4" Mai 1985 (1985-05), VOGELSANG, INDUSTRIESTRASS 2, DE-4352 HERTEN

## Beschreibung

Die Erfindung bezieht sich auf ein Verbindungselement für in Kabelkanälen verlegte Rohre und eine Rohranordnung für eine Reparaturstelle für in Kabelkanälen verlegte Rohre. Derartige Verbindungselemente und Rohranordnungen sind z.B. aus WO 91/12410 bzw. aus DE-U-9316367 bekannt.

Die Verlegung von Kabeln erfolgt, besonders im Bereich der Telekommunikation, zum Schutz vor mechanischen Beschädigungen in Schutzrohren. Um im Erdreich verlegte Rohre gleichzeitig für mehrere Kabel nutzen zu können, werden dabei in vorhandene Kabelkanalrohre Mehrfachrohre eingezogen. Jedes einzelne Rohr dieser Mehrfachrohre kann mit einem eigenen Kabel belegt werden. Diese Kabel werden meist mittels Druckluft in die Rohre eingeblasen, weshalb die Rohre druckdicht ausgebildet sein müssen. Werden eines oder mehrere Rohre des Mehrfachrohres beschädigt, müssen die Schäden durch eine ebenfalls druckdichte Reparaturanordnung behoben werden.

Die Mehrfachrohre werden üblicherweise von einem Versorgungsschacht zum nächsten in Kabelkanalrohre eingezogen. Im Bereich der Versorgungsschächte werden diese Mehrfachrohre üblicherweise unterbrochen, um z.B. Abzweige oder dergl. an den Kabeln vornehmen zu können. Wird ein solcher Versorgungsschacht beispielsweise aufgelöst, müssen die Kabel nachträglich mit einem Rohrsystem druckdicht gefaßt werden.

Ist es nicht möglich die Kabel druckdicht zu fassen, so müssen die Kabel aus den Rohren zunächst herausgezogen, die Mehrfachrohre repariert und anschließend die Kabel eingebracht und die Verbindungsstellen der Kabel neu verbunden werden. Während dieser Zeit ist die Nutzung der Kabel stets unterbrochen.

Hier setzt die Erfindung ein. Die Erfindung, wie sie in den Ansprüchen beschrieben ist, löst die Aufgabe, ein Verbindungselement für die Reparaturstellen von Mehrfachrohren mit innenliegenden Kabeln zu schaffen, das die Reparaturstelle druckdicht verschließt und auch während der Reparaturarbeiten an den beschädigten Rohren die Nutzung der Kabel im Mehrfachrohr erlaubt.

Die mit der Erfindung erzielten Vorteile liegen insbesondere in der einfachen Handhabung des druckdichten Verschlusses der Reparaturstelle und der Wirksamkeit des Verbindungselementes, sowie der ununterbrochenen Nutzbarkeit der nicht betroffenen Kabel und einer großen Zeitersparnis während der Reparaturarbeiten.

Die Erfindung ist nachstehend anhand eines in den Abbildungen dargestellten Ausführungsbeispieles näher erläutert.

Es zeigt:
- Fig. 1: eine Ansicht der Reparaturstelle im Teilschnitt,
- Fig. 2: eine Detaildarstellung der Fig. 1 und
- Fig. 3: eine Draufsicht auf die Detaildarstellung einer Ausführungsvariante der Fig. 1 und 2.

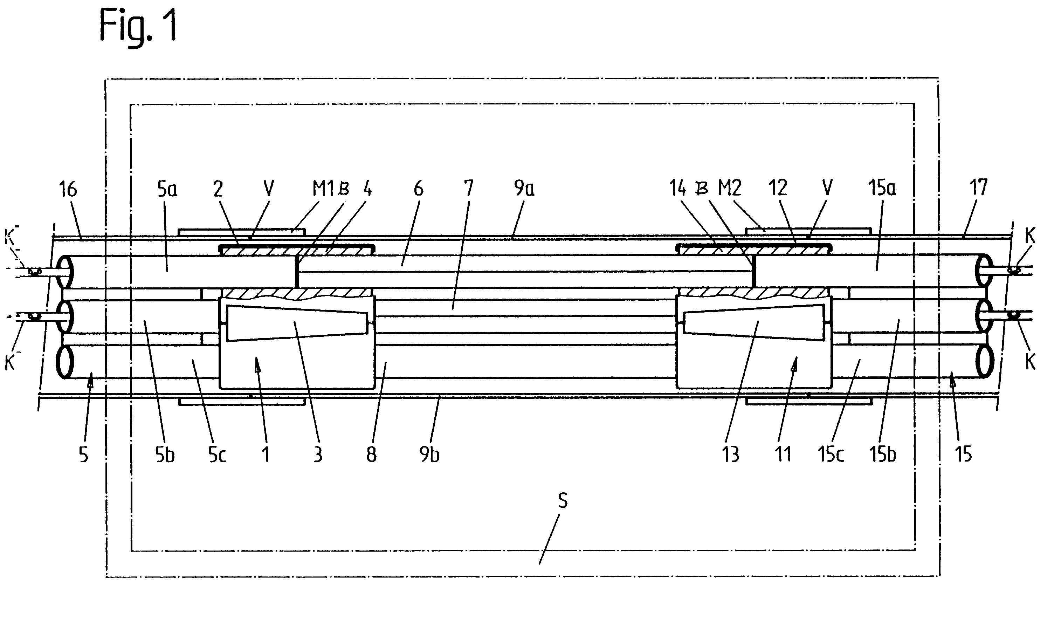

Die in der Abbildung 1 dargestellte Reparaturstelle befindet sich in einem Versorgungsschacht S, wobei das, bzw. die Kabel K frei den Versorgungsschacht (S) durchlaufen während sie sich vor und hinter dem Versorgungsschacht S in den Rohren 5a und 5b des Mehrfachrohres 5 befinden, während sich beispielsweise im Rohr 5c kein Kabel befindet. Die Rohre des Mehrfachrohres 5 verlassen hinter der Reparaturstelle den Versorgungsschacht S als Rohre 15a,b,c.

Nach Abschluß der Reparaturarbeiten, bzw. Auflösen des Versorgungsschachtes S wird die Repararturstelle von aus zwei Rohrhalbschalen (6,7) bestehenden Rohren überbrückt und die beiden Stoßstellen dieser Halbschalenrohre mit dem ungeteilten Mehrfachrohr 5, d.h. dessen Rohren 5a und 5b druckdicht verschlossen, indem das an seinen Außenrändern längsgeschlitzte Dichtelement 4 über die einzelnen Rohre des Mehrfachrohres 5 und die Halbschalenrohre gestülpt wird. Die Schlitze 4a,b,c,d (von dem nur das 4a sichtbar ist) des Dichtelementes können dazu auf einfache Weise aufgebogen werden. Über das Dichtelement 4 wird anschließend das Gehäuse 2 angebracht und mittels eines oder mehrerer Verschlüsse 3 so zusammengezogen, daß sich das Dichtelement (4) fest um die Rohrverbindung an der Stoßstelle legt und somit die Reparaturstelle druckdicht verschließt, nachdem die gleiche Anordnung, bestehend aus dem Verbindungselement 11, dem mittels der Verschlüsse 13 zusammengezogenen Gehäuse 12 und dem Dichtelement 14 über der gegenüberliegenden Stoßstelle angebracht wurde. Das nicht mit einem Kabel belegte Rohr 5c des Mehrfachrohres durchläuft die Reparaturstelle als einfaches Rohr. Über die Reparaturstelle ist schließlich noch ein aus Halbschalen 9a und 9b bestehendes Rohr gelegt und mittels je einer über dessen Stoßstelle mit dem Kabelkanalschutzrohr 16 bzw. 17 vorgesehenen Muffe M1 bzw. M2 mit letzterem dicht verbunden.

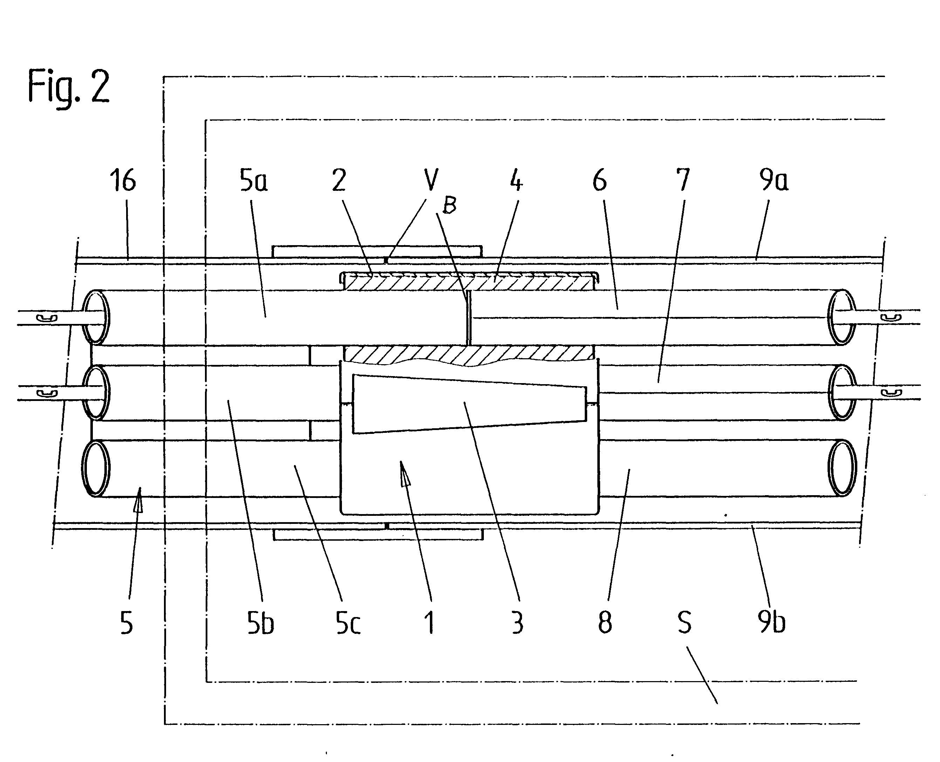

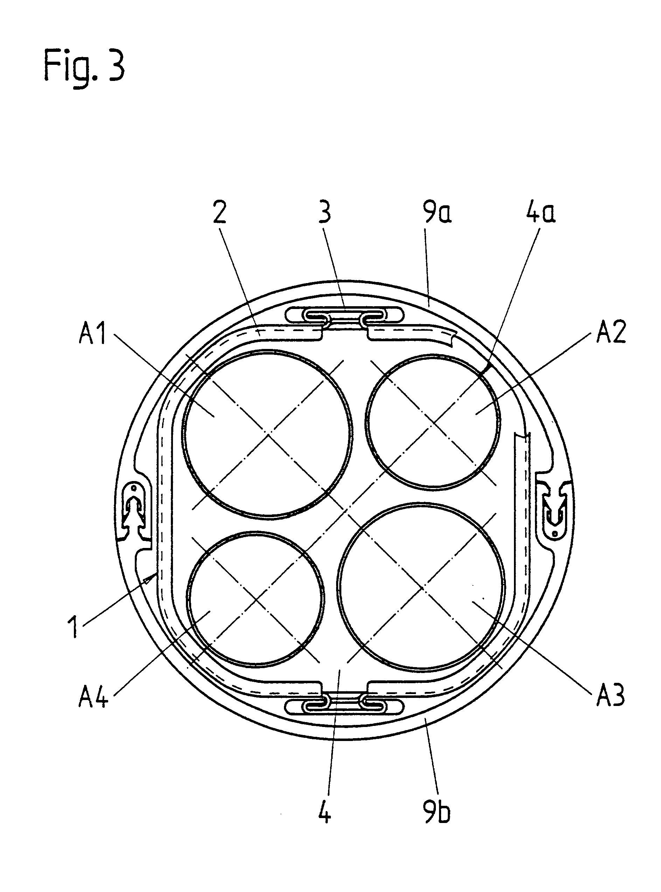

Die Abbildung 3 zeigt eine Variante der Abbildungen 1 und 2 anhand einer Draufsicht auf die Reparaturstelle und das Verbindungselement 1 mit einem aus vier Rohren A1-A4 bestehenden Mehrfachrohr A, wobei die einzelnen Rohre in dem Dichtelement 4 verlaufen. Die Rohre sind in das Dichtelement 4 durch die Schlitze 4a, am oberen rechten Rand des Gehäuses 2 im ausgebrochenen Bereich sichtbar eingebracht. Über dem Verbindungselement 1 ist das aus zwei Halbschalen 9a und 9b bestehende Schutzrohr angeordnet.

Neben dem aus zwei Rohrhalbschalen (6,7) bestehenden Rohr in dem Dichtelement 4 kann außerdem ein Verbindungsrohr 8 aufgenommen werden, das im Durchmesser einem Rohr 5 des Mehrfachrohres entspricht.

## Patentansprüche

1. Verbindungselement (1) für die Stoßstelle (B) zwischen in Kabelkanälen (16) verlegten Rohren (5a,b,c) eines Mehrfachrohres (5) und den, eine Reparaturstelle überbrückenden, aus Rohrhalbschalen (6,7) bestehenden Rohren, mit einem Gehäuse (2) und einem Dichtkörper (4) für die Stoßstelle (B), **dadurch gekennzeichnet, daß**
das Gehäuse (2) mehrteilig ausgebildet ist, in Achsrichtung geteilt und mittels eines Spannverschlusses (3) verspannt ist und in dem Gehäuse (2) außerdem ein mit Schlitzen (4a) versehener, im Gebrauch über die Stoßstelle (B) gestülpter, ebenfalls längsgeteilter, Dichtkörper (4) verpreßbar enthalten ist, in dem Dichtkörper (4) für jedes Rohr (5a,b,c) des Mehrfachrohres (5) eine dessen Durchmesser entsprechende längsgeschlitzte Aussparung (A1,2,3,4) vorhanden ist und die Reparaturstelle wenigstens teilweise, mitsamt dem Gehäuse (2) von einem aus zwei Halbrohrstücken (9a,b) bestehenden Rohrstück und einem die Stoßstelle (V) zwischen diesen Halbschalen und dem Kabelkanal (16) überbrückende Muffe (M1) im Gebrauch umfassbar ist.

2. Rohranordnung für eine Reparaturstelle für in Kabelkanälen (16) verlegte Rohre,
**dadurch gekennzeichnet, daß**
sie folgende Teile beinhaltet:
- die Reparaturstelle überbrückende, aus Rohrhalbschalen (6,7) bestehende Rohre
- an jedem Ende der aus Rohrhalbschalen bestehenden Rohre angeordneten Verbindungselementen (1) nach Anspruch 1
- und die gesamte Reparaturstelle mitsamt den Verbindungselementen (1,11) und den aus Rohrhalbschalen bestehenden Rohre, überbrückende Halbrohrstücke (9a,9b)
- und je eine im Gebrauch jede Stoßstelle (V) zwischen diesen Halbrohrstücken (9a,9b) und den Kabelkanälen (16) überbrückende Muffe (M1,M2).

3. Rohranordnung nach Anspruch 2, **dadurch gekennzeichnet, daß** das Gehäuse (2) gegenüber den Verbindungsstellen der Halbrohrstücke (9a,9ab) abgeflacht ist.

4. Rohranordnung nach Anspruch 2 **dadurch gekennzeichnet, daß** neben dem aus Halbschalen (6,7) bestehenden Rohr in dem Dichtkörper (4) mindestens ein weiteres Verbindungsrohr (8), das dem Durchmesser des Rohres (5c) entspricht, vorgesehen ist.

## Claims

1. Connection element (1) for the butt joint (B) between pipes (5a,b,c) of a multiple pipe (5) laid in cable channels (16) and pipes bridging a repair point consisting of pipe half-shells (6,7), with a housing (2) and a sealing body element (4) for the butt joint (B), **characterised in that** the housing (2) is formed from multiple parts, divided in the axial direction, and tensioned by means of a tension closure element (3), and additionally contained in the housing (2), capable of being pressed into place, is a sealing body (4), provided with slots (4a), located above the butt joint (B) when in use and likewise longitudinally divided, a recess (A1,2,3,4) with longitudinal slot is provided in the sealing body (4) for each pipe (5a,b,c) of the multiple pipe (5), with a diameter corresponding thereto, and the repair pint can at least partially be encompassed, when in use, together with the housing (2), by a pipe piece consisting of two half-pipe pieces (9a,b) and a sleeve (M1) bridging the butt joint (V) between these half-shells and the cable channel (16).

2. Pipe arrangement for a repair point for pipes laid in cable channels (16), **characterised in that** it comprises the following parts:
- The pipes consisting of pipe half-shells (6,7), bridging the repair point,
- Connection elements (1) according to Claim 1, arranged at each end of the pipes which consist of pipe half-shells,
- and half-pipe pieces (9a,9b) bridging the entire repair point, together with the connection elements (1,11) and the pipes consisting of pipe half-shells,
- and a sleeve (M1,M2) which in each case, when in use, bridges each butt joint (V) between these half-pipe pieces (9a,9b) and the cable channels (16).

3. Pipe arrangement according to Claim 2, **characterised in that** the housing (2) is flattened opposite the connection points of the half-pipe pieces (9a,9b).

4. Pipe arrangement according to Claim 2, **characterised in that** at least one further connection pipe (8) is provided next to the pipe consisting of half-shells (6,7) in the sealing body (4), said connection pipe corresponding to the diameter of the pipe (5c).

## Revendications

1. Elément d'assemblage (1) pour une jointure (B) entre des tuyaux (5a, b, c) d'un polytuyau (5) mis en place dans des goulottes (16) et les tuyaux se composant de demi-coques de tuyaux (6, 7), formant la jonction d'un point de réparation, avec un boîtier (2) et un corps étanche (4) pour la jointure (B), **caractérisé par le fait que**
le boîtier (2) est formé de plusieurs parties, divisé dans la direction axiale et calé au moyen d'une fermeture de serrage (3) et que le boîtier (2) contient de plus un corps étanche (4) compressible, qui recouvre à l'usage la jointure (B), divisé également en direction longitudinale, prévu avec des fentes (4a), que ce corps étanche (4) présente pour chaque tuyau (5a, b, c) du polytuyau (5) une rainure (A1, 2, 3, 4) fendue longitudinalement et correspondant au diamètre de ce tuyau et que le point de réparation, au moins en partie, y compris le boîtier (2), peut être entouré à l'usage d'un tuyau fait de deux pièces de demi-tuyaux (9a, b) et d'un manchon (M1) formant la jonction entre la jointure (V) située entre ces demi-coques et la goulotte (16).

2. Structure de tuyau pour un point de réparation pour des tuyaux mis en place dans des goulottes (16),
**caractérisée en ce qu'**elle
contient les pièces suivantes :
- les tuyaux se composant de demi-coques de tuyaux (6, 7), formant la jonction d'un point de réparation
- des éléments d'assemblage (1) selon la revendication 1, adaptés à chaque extrémité des tuyaux se composant de demi-coques de tuyaux (6, 7)
- et les pièces de demi-tuyaux (9a, 9b) formant une jonction de la totalité du point de réparation, y compris les éléments d'assemblage (1, 11) et les tuyaux se composant de demi-coques de tuyaux
- et à chaque fois un manchon (M1, M2) formant une jonction, utilisé pour chaque jointure (V) entre ces pièces de demi-tuyaux (9a, 9b) et les goulottes (16).

3. Structure de tuyau selon la revendication 2, **caractérisée en ce que** le boîtier (2) est aplati par rapport aux points d'assemblage des pièces en demi-tuyaux (9a, 9ab).

4. Structure de tuyau selon la revendication 2, **caractérisée en ce qu'**il est prévu à côté du tuyau se composant des demi-coques (6, 7), dans le corps étanche (4), au moins un autre tuyau de connexion (8) dont le diamètre correspond au tuyau (5c).
